# EUROPÄISCHE PATENTSCHRIFT

(11) **EP 1 649 196 B1**
(45) Veröffentlichungstag und Bekanntmachung des Hinweises auf die Patenterteilung: **08.11.2006**
(21) Anmeldenummer: 04740901.6
(22) Anmeldetag: 10.07.2004
(51) Int. Cl.: F16H 57/08

(54) **PLANETENTRÄGER FÜR GETRIEBE**
PLANET CARRIER FOR A GEARBOX
PORTE-SATELLITES POUR BOITES DE VITESSES

(30) Priorität: 25.07.2003 DE 10333879
(43) Veröffentlichungstag der Anmeldung: 26.04.2006
(73) Patentinhaber: Schaeffler KG, 91074 Herzogenaurach (DE)
(72) Erfinder: RADINGER, Norbert, 90475 Nürnberg (DE); FICK, Matthias, 91220 Schnaittach (DE)
(86) Internationale Anmeldenummer: PCT/EP2004/007637
(87) Internationale Veröffentlichungsnummer: WO 2005/015056

(56) Entgegenhaltungen:
- DE-C- 4 302 844
- US-A- 3 842 481
- US-A- 5 292 292
- PATENT ABSTRACTS OF JAPAN Bd. 1995, Nr. 08, 29. September 1995 (1995-09-29) -& JP 07 133848 A (AISIN AW CO LTD), 23. Mai 1995 (1995-05-23)

## Beschreibung

### Gebiet der Erfindung

Die Erfindung betrifft einen Planetenträger für Getriebe, insbesondere Automatik- oder Lastschaltgetriebe, in dem Planetenräder auf Bolzen gelagert sind die mit einem koaxial zur Mittelachse des Planetenträgers angeordneten Sonnenrad und einem Hohlrad im Eingriff stehen. Weiterhin ist der Planetenträger mit einem Lamellenkörper für Kupplungs- oder Bremslamellen versehen.

### Hintergrund der Erfindung

Planetengetriebe der genannten Art sind vor allem in Automatik- oder Lastschaltgetrieben in Verwendung. Sie bestehen aus einem zentralen Sonnenrad, einem konzentrisch dazu angeordneten Hohlrad und mehreren Planetenrädern, die zwischen dem Sonnen und dem Hohlrad angeordnet sind. Die Drehachsen der Planetenräder sind parallel, aber mit Achsabstand, zu denen des Sonnen- und Hohlrades ausgerichtet, wobei die Verzahnung der Planetenräder in ständigem Eingriff mit der Verzahnung des Sonnen- bzw. des Hohlrades steht. Die Planetenräder sind auf einem Planetenträger drehbar gelagert. Planetenträger, Sonnen- und Hohlrad sind zur Veränderung des Übersetzungsverhältnisses miteinander bzw. mit einem feststehenden Getriebebauteil kuppelbar, wodurch die aneinander gekuppelten Bauteile auf gleicher Drehzahl gehalten bzw. nicht drehbar fixiert werden. Die Kopplung verschiedener Bauteile wird im Allgemeinen durch Bremsen oder Lamellenkupplungen bewerkstelligt.

Es sind Planetenträger für Getriebe bekannt, die aus einem ein- oder mehrteiligen Tragflansch für die Planetenräder und einem rotationssymmetrischen topfartigen Teil bestehen. An letzterem ist üblicherweise eine Verzahnung für Kupplungs- oder Bremslamellen angebracht. Eine derartige Vorrichtung ist aus DE 195 44 197 bekannt. Danach ist der Planetenträger aus einer Lagerbasis und einem Lagerdeckel aufgebaut, die, durch Abstandssäulen getrennt, zwei parallel zueinander beabstandete Lagerebenen definieren. Die Verbindung zwischen der Lagerbasis und dem Lagerdeckel wird über an den offenen Enden der Abstandssäulen angebrachte radial nach außen weisende Flanschplatten mittels Schweißverbindung hergestellt. Dabei sind die Flanschplatten über Ringsegmente miteinander verbunden. Weiterhin wird ausgeführt, dass die Lagerbasis als Guss- oder Schmiedeteil hergestellt sein soll, was dazu führt, dass die Lagerbasis im Bereich der Abstandssäulen kostenintensiv nachbearbeitet werden muss. Weitere Nachteile dieser Lösung sind hohe Herstellungskosten von Gieß- oder Schmiedeteilen, deren hohes Gewicht und geringe Festigkeit im Bereich von Kanten.

Eine weitere Ausführung eines gattungsgemäßen Planetenträgers ist in der Patentschrift DE 43 02 844 dargestellt. Hierbei handelt es sich um einen Planetenträger der aus einem Planetenträgernabenteil und einem Seitenwandbauteil besteht, die als Fließpressteil bzw. Blechpressteil ausgebildet sind. Das Seitenwandbauteil ist ein topfförmig ausgeführter Lamellenkörper, während das Planetenträgernabenteil aus einer ringförmigen Scheibe und einem rohrförmigen Ansatz besteht. Beide Bauteile sind, mit Ausnahme von Ausbuchtungen, die sich in axialer Richtung erstrecken, rotationssymmetrisch. Die Ausbuchtungen erstrecken sich vom Boden des Seitenwandbauteils in axialer Richtung nach außen und von der Scheibe des Planetenträgernabenteils axial vom ringförmigen Ansatz weg. Die Form der axialen Ausbuchtungen macht aufwändige Verfahrensschritte während des Umformungsprozesses nötig.

Beim Zusammenbau des Planetenträgers werden die beiden Bauteile im Bereich der Ausbuchtungen miteinander verschweißt. Dabei muß sichergestellt werden, dass sie sowohl in axialer als auch in radialer und Umfangsrichtung exakt positioniert sind. Dies erfordert enorme Genauigkeit bei der Ausbildung der Ausbuchtungen und aufwändige Positionierungs- und Zentrierungsmaßnahmen bei der Herstellung der Schweißverbindung, was der wirtschaftlichen Fertigung der Planetenträger entgegensteht.

### Zusammenfassung der Erfindung

Der Erfindung liegt daher die Aufgabe zu Grunde, diese geschilderten Nachteile zu vermeiden und somit einen gewichtsoptimierten Planetenträger zu schaffen, dessen Einzelteile kostengünstig und mit hoher Maßgenauigkeit hergestellt und ohne aufwändige Positionierungsmaßnahmen zusammengefügt werden können.

Erfindungsgemäß wird diese Aufgabe dadurch gelöst, dass der Planetenträger für Getriebe ein Flanschteil aufweist, bestehend aus einer radial verlaufenden ersten ringförmige Scheibe, die mit einer durch axialen gebildeten Aufnahme und einem sich axial erstreckenden topfförmigen Ansatz, ausgehend von einem Innenrand der Aufnahme, versehen ist, und einem stufenartig ausgeführten Topf, bestehend aus einem ersten Hülsenabschnitt und einem zweiten Hülsenabschnitt kleineren und größeren Durchmessers, wobei diese an jeweils einem ihrer Enden über eine radial verlaufende zweite ringförmige Scheibe, axial zueinander versetzt, miteinander verbunden sind, weiterhin bestehend aus einem abgewinkelten ringförmigen Ansatz am äußeren Ende des ersten Hülsenabschnittes. Der Außendurchmesser des ersten Hülsenabschnittes ist dem Innendurchmesser der Aufnahme des Flanschteils angepaßt, so dass der Topf an seinem ansatzseitigen Ende in die radiale Aufnahme des Flanschteils eingreift und von dieser in axialer Richtung teilweise übergriffen wird. Dadurch liegt der ringförmige Ansatz an der Aufnahme des Flanschteils in axialer Richtung an. Eine ringförmig umlaufenden Schweißverbindung zwischen dem ringförmigen Ansatz und der Aufnahme verbindet den stufenartigen Topf mit dem Flanschteil. Weiterhin sind Ausnehmungen für Planetenräder im ersten Hülsenabschnitt angebracht, durch die diese nach innen durch den Hülsenabschnitt hindurchgeführt sind und in das Sonnenrad eingreifen.

Oben beschriebene Anordnung ermöglicht es mit einem Minimum an Einzelteilen einen erfindungsgemäßen Planetenträger herzustellen. Durch die Ausführung des Planetenträgers aus zwei ineinander eingesetzten rotationssymmetrischen bzw. teilweise rotationssymmetrischen Komponenten, wobei der Außendurchmesser des ersten Hülsenabschnittes dem Durchmesser der Aufnahme des Flanschteils angepasst ist, wird auf einfache Art und Weise die axiale Positionierung und das Zusammenfallen der Mittelachsen der beiden Komponenten sichergestellt. Die erste ringförmige Scheibe des Flanschteils und die zweite ringförmige Scheibe des stufenartig ausgeführten Topfes begrenzen einen ringförmig um den Planetenträger umlaufenden Aufnahmeraum für Planetenräder, der in radialer Richtung nach innen durch den ersten Hülsenabschnitt begrenzt wird und nach außen offen ist. Das Planetenrad greift durch Ausnehmungen im ersten Hülsenabschnitt und steht so mit dem Sonnenrad bzw. einem nicht dargestellten, koaxial dazu angeordneten Hohlrad im Eingriff. Zur Aufnahme einer An- oder Abtriebswelle ist das Flanschteil mit einem topfförmigen Ansatz versehen. Durch die Ausführung der Einzelkomponenten als rotationssymmetrische Teile entfällt die Notwendigkeit der Positionierung der Teile relativ zueinander in Umfangsrichtung, da keine ausgezeichnete Orientierung existiert. Weiterhin wird durch das passgenaue Ineinanderfassen zweier rotationssymmetrischer Teile bei Zusammenbau des Planetenträger automatisch die radiale Positionierung erreicht. Gleichzeitig bildet die Aufnahme der ersten ringförmigen Scheibe des Flanschteils einen Anschlag für den stufenartig ausgeführten Topf in axialer Richtung, wodurch die axiale Positionierung erreicht wird. Somit sind beim Zusammenbau des Planetenträger keinerlei Orientierungs- oder Positionierungsmaßnahmen zu ergreifen. Weiterhin wird vorgeschlagen, dass der Innendurchmesser des ringförmigen Ansatzes des Topfes größer ausgeführt ist, als der Innendurchmesser der Aufnahme des Flanschteils, wodurch eine Axiallageraufnahme geschaffen wird, in der ein Axiallager angeordnet ist.

Vorteilhafterweise ist der zweite Hülsenabschnitt mit einer Verzahnung für Brems- oder Kupplungslamellen versehen.

In weiteren Ausführungsformen der Erfindung ist vorgesehen, dass das Flanschteil und/oder der stufenartig ausgeführte Topf durch spanloses Umformen eines Blechteils hergestellt werden. Vorteile dieser Ausführungsformen sind die hohe Festigkeit und das geringe Gewicht, die einfache Herstellung und die hohe Maßgenauigkeit und Qualität der Bauteile, wodurch kostspielige Nachbearbeitungen, insbesondere im Bereich der Schweißverbindung entfallen.

Weiterhin ist vorgesehen, dass fluchtende Bohrungen in der ersten ringförmigen Scheibe des Flanschteils und in der zweiten ringförmigen Scheibe des Topfes zur Aufnahme von Bolzen angeordnet sind, auf denen die Planetenräder gelagert sind.

Vorgeschlagen wird außerdem, dass die Schweißverbindung zwischen dem ringförmigen Ansatz des stufenförmig ausgebildeten Topfes und der ringförmigen Aufnahme des Flanschteils mittels eines Widerstandsschweißverfahrens hergestellt wird.

Ebenfalls denkbar ist dass die Innenfläche des rohrförmigen Ansatzes mit einer Innenkerbverzahnung versehen ist. Dies ermöglicht eine formschlüssige Verbindung des Planetenträgers mit einer Welle.

In einer weiteren Ausführung der Erfindung ist auf dem topfförmigen Ansatz des Flanschteils ein Innenring eines Freilaufs oder eines Wälzlagers angebracht.

Die Verbindung zwischen topfförmigen Ansatz und Innenring wird vorzugsweise kraftschlüssig hergestellt. Denkbar ist allerdings auch eine formschlüssige Verbindung oder eine unterstützende Außenkerbverzahnung auf dem topfförmigen Ansatz.

Der Innenring kann sowohl massiv, als auch in Form eines, durch spanloses Umformen eines Blechteils hergestellten, Topfes mit zwei Borden ausgeführt sein.

In einer weiteren vorteilhaften Ausführung der Erfindung besteht der Innenring des Freilaufes aus einem spanlos gefertigten Topf mit zwei Borden. Dies führt zu einer signifikanten Gewichtsersparnis.

### Kurze Beschreibung der Zeichnungen

Weitere Merkmale der Erfindung ergeben sich aus der nachfolgenden Beschreibung und aus den Zeichnungen, in der Ausführungsbeispiele der Erfindung vereinfacht dargestellt sind. Es zeigen:
- Figur 1: eine schematische Darstellung eines Planetengetriebes,
- Figur 2: einen Längsschnitt durch einen erfindungsgemäßen Planetenträger,
- Figur 3: einen Längsschnitt durch eine zweite Ausführungsform eines erfindungsgemäßen Planetenträgers,

### Ausführliche Beschreibung der Zeichnungen

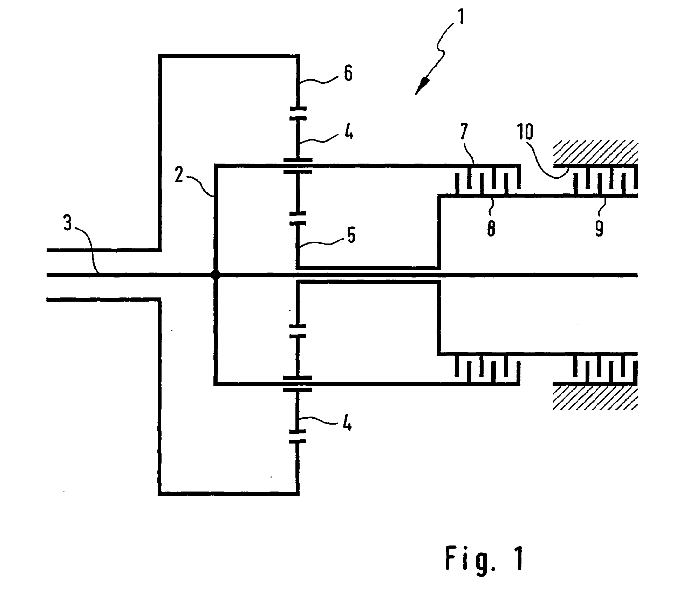

Figur 1 zeigt als Beispiel für die Verwendung der erfindungsgemäßen Lehre eine schematische Darstellung eines Planetengetriebes 1, wobei mit 2 ein Planetenträger bezeichnet ist. Der Planetenträger 2 ist drehfest mit einer Welle 3 verbunden und ist außerhalb seiner Längsachse mit Planetenrädern 4 versehen. Die Drehachse der Planetenräder 4 liegt parallel zur Längsachse des Planetenträgers 2. Konzentrisch und drehbar auf dem Planetenträger 2 bzw. der Welle 3 gelagert sind ein Sonnenrad 5 und ein Hohlrad 6 angeordnet, die mit den Planetenrädern 4 in ständigem Eingriff stehen. Der Planetenträger 2 ist mit einem ersten Lamellenkörper 7 versehen. Über einen zweiten Lamellenkörper 8 , der mit dem Sonnenrad 5 verbunden ist, können diese Komponenten aneinander gekuppelt werden. Mit Hilfe eines dritten Lamellenkörpers 9, der mit dem Sonnenrad 5 verbunden ist, kann dieses über einen gehäusefesten vierten Lamellenkörper 10 abgebremst werden.

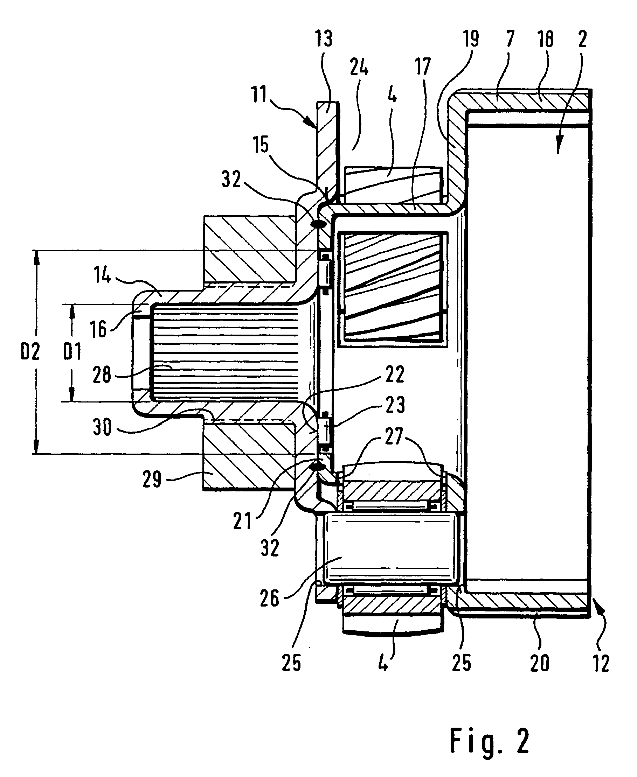

Der erfindungsgemäße Planetenträger 2, der weiterhin in Figur 2 dargestellt ist, besteht aus einem einteiligen Flanschteil 11 und einem stufenartig ausgeführten, ebenfalls einteiligen Topf 12.

Das Flanschteil 11 setzt sich aus einer radial verlaufenden ersten ringförmigen Scheibe 13 und einem sich axial erstreckenden topfförmigen Ansatz 14, ausgehend vom Innenrand der ersten ringförmigen Scheibe 13, zusammen. Weiterhin ist die erste ringförmige Scheibe 13 mit einer durch axialen Versatz gebildeten zylindrischen Aufnahme 15 versehen, die sich vom Innenrand der ersten ringförmigen Scheibe 13 in radialer Richtung nach außen erstreckt. Ein Boden 16 ist am von der Aufnahme 15 abgewandten Ende des topfförmigen Ansatzes 14 ringförmig ausgebildet. Der stufenartig ausgeführte Topf 12 besteht aus einem ersten Hülsenabschnitt 17 und einem zweiten Hülsenabschnitt 18, wobei der Durchmesser des ersten Hülsenabschnittes 17 kleiner ist als der des zweiten Hülsenabschnittes 18. Die Hülsenabschnitte 17 und 18 sind an jeweils einem Ende mittels einer zweiten ringförmigen Scheibe 19, axial zueinander versetzt, verbunden. Der zweite Hülsenabschnitt 18 ist an seinem Außenumfang mit einer Verzahnung 20 für den Eingriff von nicht dargestellten Kupplungs- oder Bremslamellen versehen. Am von der zweiten ringförmigen Scheibe 19 abgewandten Ende des ersten Hülsenabschnittes 17 ist ein radial nach innen abgewinkelter, ringförmiger Ansatz 21 ausgebildet, wodurch die Stabilität des ersten Hülsenabschnittes 17 erhöht wird.

Der Durchmesser der Aufnahme 15 ist dem Außendurchmesser des ersten Hülsenabschnittes 17 angepaßt. Der erste Hülsenabschnitt 17 des Topfes greift mit seinem ansatzseitigen Ende in radialer Richtung bündig in die Aufnahme 15 des Flanschteils 11 ein und wird von dieser in axialer Richtung teilweise überstreckt. Gleichzeitig dient die Aufnahme 15 als Anschlag für den ringförmigen Ansatz 21. Durch die erfindungsgemäße Ausführung der zwei Komponenten des Planetenträgers wird sowohl die radiale, als auch axiale Positionierung der zwei Komponenten zueinander ohne aufwändige Positionierungsmaßnahmen erreicht. Eine Positionierung in Umfangsrichtung ist auf Grund der Rotationssymmetrie der einzelnen Komponenten nicht erforderlich.

Zwischen dem ersten Hülsenabschnitt 17 und der Aufnahme 15 besteht eine kraftschlüssige Verbindung. Weiterhin ist eine ringförmig umlaufende Schweißverbindung 32 zwischen dem ringförmigen Ansatz 21 und der Aufnahme 15 vorgesehen, wodurch eine hohe Festigkeit der Verbindung erreicht wird und die zwei Komponenten gegen Verdrehen in Umfangsrichtung gesichert werden. Zur Herstellung der stoffschlüssigen Verbindung wird ein Widerstandsschweißverfahren, wie beispielsweise Kondensatorentladungsschweißen, vorgeschlagen.

Der Innendurchmesser D1 der Aufnahme 15 ist kleiner, als der Innendurchmesser D2 des ringförmigen Ansatzes 21, wodurch eine Axiallageraufnahme 22 gebildet wird, in der ein Axiallager 23 angebracht ist. An diesem ist ein nicht dargestelltes Sonnenrad drehbar relativ zum Planetenträger gelagert.

Die axiale Erstreckung des ersten Hülsenabschnittes 17 ist so gewählt, dass ein Aufnahmeraum 24 entsteht in dem Planetenräder 4 angeordnet sind. Der Aufnahmeraum 24 wird in axialer Richtung von der ersten 13 und zweiten ringförmigen Scheibe 19 und in radialer Richtung nach innen vom ersten Hülsenabschnitt 17 begrenzt. Die ringförmigen Scheiben 13 und 19 werden nach dem Ausbilden der Schweißverbindung 32 mit zueinander fluchtenden Bohrungen 25 versehen, in denen Bolzen 26 fixiert sind. Auf den Bolzen sind Planetenräder 4 drehbar gelagert. Im Bereich der Planetenräder 4 ist der erste Hülsenabschnitt 17 mit Abflachungen versehen, in denen Ausnehmungen 27 vorgesehen sind. Diese erstrecken sich in axialer Richtung zwischen den ringförmigen Scheiben 13 und 19. Die Ausdehnung in Umfangsrichtung ist so gehalten, dass die Planetenräder 4, um die Bolzen 26 frei drehbar sind und durch die Ausnehmungen 27 greifen können. Dabei steht die Verzahnung der Planetenräder 4 mit der Verzahnung eines nicht dargestellten Hohlrades und eines ebenfalls nicht dargestellten Sonnenrades im dauerhaften Eingriff.

Sowohl das Flanschteil 11 als auch der stufenförmig ausgebildete Topf 12 sind durch spanlose Umformung aus einem Blechteil hergestellt. Mit Ausnahme der Bohrungen 25 können die einzelnen Komponenten in einem Arbeitsgang gefertigt werden. Dabei wird in jeweils einem Tiefziehprozess das Flanschteil bzw. der stufenartig ausgeführte Topf gefertigt. Anschließend wird die Schweißverbindung 32 hergestellt und danach die ringförmigen Scheiben 13 und 19 an den entsprechenden Stellen mit Bohrungen versehen. Dies erlaubt die kostengünstige Herstellung der Einzelteile bei gleichzeitiger hoher Maßgenauigkeit. Weiterhin können nachbearbeitende Schritte, insbesondere im Bereich der Schweißverbindung 32, entfallen.

Am Innenumfang des topfförmigen Ansatzes 14 ist eine Innenkerbverzahnung 28 angebracht, wodurch eine nicht dargestellte Welle formschlüssig in Wirkverbindung mit dem Planetenträger tritt. Dabei dient der ringförmige Boden 16 als Anschlag für die Welle.

Weiterhin ist ein Innenring 29 eines Freilaufs oder Wälzlagers zur Lagerung des Hohlrades dargestellt, der auf dem topfförmigen Ansatz 14 mittels eines Pressverbandes angebracht ist. Zusätzlich kann der Innenring mit dem topfförmigen Ansatz 14 über eine auf dem topfförmigen Ansatz 14 angebrachten Au-ßenkerbverzahnung 30 im Wirkschluß stehen. Der Innenring ist in der in Figur 2 dargestellten Ausführungsform massiv ausgebildet.

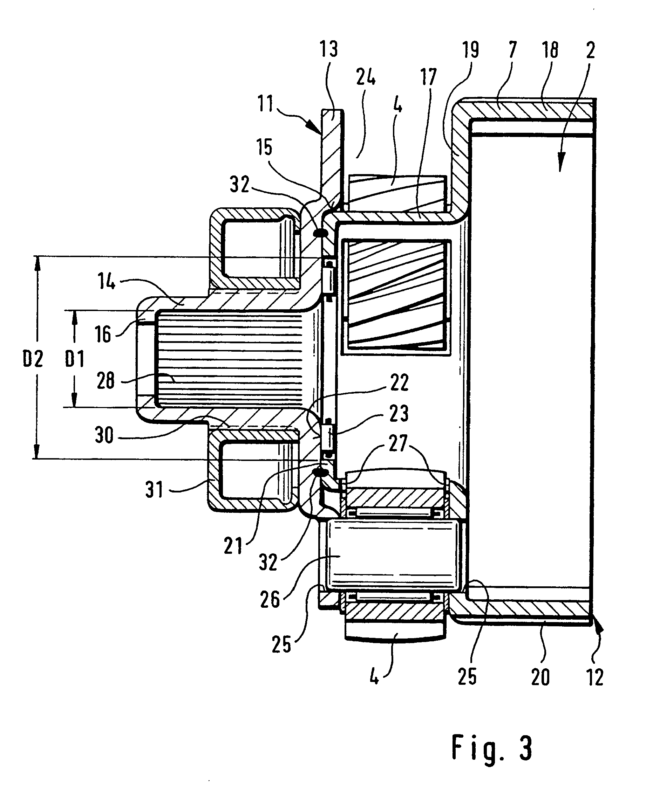

In einer weiteren Ausführungsform der Erfindung, die in Figur 3 dargestellt ist, besteht der Innenring 31 aus einem spanlos gefertigten Topf mit zwei Borden, der ebenfalls mittels eines Pressverbandes in Verbindung mit einer auf dem topfförmigen Ansatz 14 angebrachten Außenkerbverzahnung 30 im Wirkschluß steht.

Durch die passgenaue Anordnung der zwei nahezu rotationssymmetrischen Bauteile ineinander wird erreicht, dass aufwändige Zentrierungsmaßnahmen beim Zusammenbau entfallen können. Die einzelnen Komponenten sind leicht und kostengünstig herzustellen und durch das Ausgangsmaterial in Form von Blech ist eine leichte Bauweise realisiert.

### Bezugszahlenliste

- 1: Planetengetriebe
- 2: Planetenträger
- 3: Welle
- 4: Planetenrad
- 5: Sonnenrad
- 6: Hohlrad
- 7: erster Lamellenkörper
- 8: zweiter Lamellenkörper
- 9: dritter Lamellenkörper
- 10: vierter Lamellenkörper
- 11: Flanschteil
- 12: Topf
- 13: erste ringförmige Scheibe
- 14: topfförmiger Ansatz
- 15: Aufnahme
- 16: ringförmiger Boden
- 17: erster Hülsenabschnitt
- 18: zweiter Hülsenabschnitt
- 19: zweite ringförmige Scheibe
- 20: Verzahnung
- 21: ringförmiger Ansatz
- 22: Axiallageraufnahme
- 23: Axiallager
- 24: Aufnahmeraum
- 25: Bohrung
- 26: Bolzen
- 27: Ausnehmung
- 28: Innenkerbverzahnung
- 29: Innenring
- 30: Außenkerbverzahnung
- 31: Innenring
- 32: Schweißverbindung

- D1: Innendurchmesser
- D2: Innendurchmesser

## Patentansprüche

1. Planetenträger (2) für Getriebe
- mit einem Flanschteil (11), bestehend aus einer radial verlaufenden ersten ringförmigen Scheibe (13), die mit einer durch axialen Versatz gebildeten Aufnahme (15) und einem sich axial erstreckenden topfförmigen Ansatz (14), ausgehend von einem Innenrand der Aufnahme (15), versehen ist,
- mit einem stufenartig ausgeführten Topf (12), bestehend aus einem ersten Hülsenabschnitt (17) und einem zweiten Hülsenabschnitt (18) kleineren und größeren Durchmessers, wobei diese an jeweils einem ihrer Enden über eine radial verlaufende zweite ringförmige Scheibe (19), axial zueinander versetzt, miteinander verbunden sind, weiterhin bestehend aus einem abgewinkelten ringförmigen Ansatz (21) am äußeren Ende des ersten Hülsenabschnittes (17),
- wobei der Außendurchmesser des ersten Hülsenabschnittes (17) dem Innendurchmesser der Aufnahme (15) des Flanschteils (11) angepaßt ist, wobei der Topf (12) an seinem ansatzseitigen Ende in die radiale Aufnahme (15) des Flanschteils (11) eingreift und von dieser in axialer Richtung teilweise übergriffen wird, wodurch der ringförmige Ansatz (21) an der Aufnahme (15) des Flanschteils (11) in axialer Richtung anliegt,
- und mit einer ringförmig umlaufenden Schweißverbindung (32) zwischen dem ringförmigen Ansatz (21) und der Aufnahme (15), sowie
- mit Ausnehmungen (27) für Planetenräder (4) im ersten Hülsenabschnitt (17), durch die diese nach innen durch den Hülsenabschnitt (17) hindurchgeführt sind und in das Sonnenrad (5) eingreifen.

2. Planetenträger (2) für Getriebe nach Anspruch 1 **dadurch gekennzeichnet, dass** der Innendurchmesser (D2) des ringförmigen Ansatzes (21) des Topfes (12) größer ausgeführt ist, als der Innendurchmesser (D1) der Aufnahme (15) des Flanschteils (11), wodurch eine Axiallageraufnahme (22) geschaffen wird, in der ein Axiallager (23) angeordnet ist.

3. Planetenträger (2) für Getriebe nach Anspruch 1 **dadurch gekennzeichnet, dass** der zweite Hülsenabschnitt (18) mit einer Verzahnung (20) für Brems- oder Kupplungslamellen versehen ist.

4. Planetenträger (2) für Getriebe nach Anspruch 1 **dadurch gekennzeichnet, dass** der Topf (12) durch spanloses Umformen eines Blechteils hergestellt ist.

5. Planetenträger (2) für Getriebe nach Anspruch 1 **dadurch gekennzeichnet, dass** das Flanschteil (11) durch spanloses Umformen eines Blechteils hergestellt ist.

6. Planetenträger (2) für Getriebe nach Anspruch 1 **dadurch gekennzeichnet, dass** fluchtende Bohrungen (25) in der ersten ringförmigen Scheibe (13) des Flanschteils (11) und in der zweiten ringförmigen Scheibe (19) des Topfes (12) zur Aufnahme von Bolzen (26) angeordnet sind, auf denen die Planetenräder (4) gelagert sind.

7. Planetenträger (2) für Getriebe nach Anspruch 1 **dadurch gekennzeichnet, dass** die Schweißverbindung (32) zwischen dem ringförmigen Ansatz (21) des stufenförmig ausgebildeten Topfes (12) und der ringförmigen Aufnahme des Flanschteils mittels eines Widerstandsschweißverfahrens hergestellt ist.

8. Planetenträger (2) für Getriebe nach Anspruch 1 **dadurch gekennzeichnet, dass** die Innenfläche des topfförmigen Ansatzes (14) mit einer Innenkerbverzahnung (28) versehen ist.

9. Planetenträger (2) für Getriebe nach Anspruch 1 **dadurch gekennzeichnet, dass** auf dem topfförmigen Ansatz (14) des Flanschteils (11) ein Innenring (29,31) eines Freilaufs oder eines Wälzlager angebracht ist.

10. Planetenträger (2) für Getriebe nach Anspruch 9 **dadurch gekennzeichnet, dass** der Innenring (29,31) kraftschlüssig auf dem topfförmigen Ansatz (14) des Flanschteils (11) aufgebracht ist.

11. Planetenträger (2) für Getriebe nach Anspruch 9 **dadurch gekennzeichnet, dass** der Innenring (29,31) formschlüssig auf dem topfförmigen Ansatz (14) des Flanschteils (11) aufgebracht ist.

12. Planetenträger (2) für Getriebe nach Anspruch 10 **dadurch gekennzeichnet, dass** der topfförmigen Ansatz (14) des Flanschteils (11) mit einer Außenkerbverzahnung (30) versehen ist, auf der der Innenring (29,31) aufgebracht ist.

13. Planetenträger (2) für Getriebe nach Anspruch 9 **dadurch gekennzeichnet, dass** der Innenring (29) des Wälzlagers massiv ausgebildet ist.

14. Planetenträger (2) für Getriebe nach Anspruch 9 **dadurch gekennzeichnet, dass** der Innenring (31) des Wälzlagers aus einem spanlos gefertigten Topf mit zwei Borden besteht.

## Claims

1. Planet carrier (2) for transmissions
- having a flange member (11), comprising a first radially extending, annular disk (13) that is provided with a reception (15) formed by an axial offset, and an axially extending pot-shaped extension (14) starting from an inner edge of the reception (15),
- further having a stepped pot (12) comprising a first bushing section (17) and a second bushing section (18) of smaller and larger diameter, respectively, that are connected axially offset to each other at one of their ends through a radially extending, second annular disk (19), and also comprising an angled annular extension (21) on the outer end of the first bushing section (17),
- wherein the outer diameter of the first bushing section (17) is matched to the inner diameter of the reception (15) of the flange member (11), the pot (12) engages at its extension-proximate end into the radial reception (15) of the flange member (11) while being partially engaged-over by this in axial direction, so that the annular extension (21) bears against the reception (15) of the flange member (11) in axial direction,
- and having a continuous annular weld joint (32) between the annular extension (21) and the reception (15), as also
- recesses (27) for planet gears (4) in the first bushing section (17), through which the planet gears extend inwards through the bushing section (17) and engage into the sun gear (5).

2. Planet carrier (2) for transmissions according to claim 1, **characterised in that** the inner diameter (D2) of the annular extension (21) of the pot (12) is larger than the inner diameter (D1) of the reception (15) of the flange member (11), so that a thrust bearing reception (22) is created in which a thrust bearing (23) is arranged.

3. Planet carrier (2) for transmissions according to claim 1, **characterised in that** the second bushing section (18) is provided with a gearing (20) for brake or clutch plates.

4. Planet carrier (2) for transmissions according to claim 1, **characterised in that** the pot (12) is made by shaping a sheet metal part without chip removal.

5. Planet carrier (2) for transmissions according to claim 1, **characterised in that** the flange member (11) is made by shaping a sheet metal part without chip removal.

6. Planet carrier (2) for transmissions according to claim 1, **characterised in that** aligned bores (25) in the first annular disk (13) of the flange member (11) and in the second annular disk (19) of the pot (12) are arranged for receiving pins (26) on which the planet gears (4) are mounted.

7. Planet carrier (2) for transmissions according to claim 1, **characterised in that** the weld joint (32) between the annular extension (21) of the stepped pot (12) and the annular reception of the flange member are made by a resistance welding method.

8. Planet carrier (2) for transmissions according to claim 1, **characterised in that** the inner surface of the pot-shaped extension (14) is provided with an inner channel gearing (28).

9. Planet carrier (2) for transmissions according to claim 1, **characterised in that** an inner ring (29, 31) of a free-wheel or of a rolling bearing is attached to the pot-shaped extension (14) of the flange member (11).

10. Planet carrier (2) for transmissions according to claim 9, **characterised in that** the inner ring (29, 31) is mounted by force-locking on the pot-shaped extension (14) of the flange member (11).

11. Planet carrier (2) for.transmissions according to claim 9, **characterised in that** the inner ring (29, 31) is mounted by positive engagement on the pot-shaped extension (14) of the flange member (11).

12. Planet carrier (2) for transmissions according to claim 10, **characterised in that** the pot-shaped extension (14) of the flange member (11) is provided with an outer channel gearing (30) on which the inner ring (29, 31) is mounted.

13. Planet carrier (2) for transmissions according to claim 9, **characterised in that** the inner ring (29) of the rolling bearing has a solid configuration.

14. Planet carrier (2) for transmissions according to claim 9, **characterised in that** the inner ring (31) of the rolling bearing consists of a pot made without chip removal and having two flanges.

## Revendications

1. Porte-satellites (2) pour engrenages
- ayant une pièce bride (11) comprenant un premier disque annulaire (13) qui s'étend en direction radiale en étant muni d'une réception (15) formée par un décalage axial, et un prolongement (14) en forme de pot qui s'étend en direction axiale à partir d'un bord intérieur de la réception (15),
- ayant, en plus, un pot (12) étagé constitué d'une première section (17) en forme de douille et d'une seconde section (18) en forme de douille, le diamètre de ladite première section (17) étant inférieur au diamètre de ladite seconde section (18), ces deux sections étant reliées à décalage axial, l'une à l'autre, à l'une de leurs extrémités par un second disque annulaire (19) qui s'étend en direction radiale, ledit pot (12) étant constitué, en outre, d'un prolongement annulaire (21) replié sur l'extrémité extérieure de la première section (17) en forme de douille,
- le diamètre extérieur de la première section (17) en forme de douille étant adapté au diamètre intérieur de la réception (15) de la pièce bride (11), le pot (12) s'engageant à son extrémité du côté prolongement dans la réception (15) radiale de la pièce bride (11) en étant partiellement engagé à l'extérieur par la réception en direction axiale, de sorte que le prolongement annulaire (21) s'appuie contre la réception (15) de la pièce bride (11) en direction axiale,
- et ayant, en outre, un joint soudé (32) annulaire continu entre le prolongement annulaire (21) et la réception (15), ainsi que
- des évidements (27) pour des pignons satellites (4) dans la première section (17) en forme de douille, par lesquels les pignons satellites (4) s'étendent vers l'intérieur au travers de la première section (17) en forme de douille et s'engagent dans le pignon planétaire (5).

2. Porte-satellites (2) pour engrenages selon la revendication 1, **caractérisé en ce que** le diamètre intérieur (D2) du prolongement annulaire (21) du pot (12) et supérieur au diamètre intérieur (D1) de la réception (15) de la pièce bride (11), de sorte que, une réception (22) de palier de butée est formée, un palier de butée (23) est agencé dans cette réception.

3. Porte-satellites (2) pour engrenages selon la revendication 1, **caractérisé en ce que** la seconde section (18) en forme de douille est munie d'une denture (20) pour des disques de frein ou des disques d'embrayage.

4. Porte-satellites (2) pour engrenages selon la revendication 1, **caractérisé en ce que** le pot (12) est formé à partir d'une pièce en tôle sans enlèvement de copeaux.

5. Porte-satellites (2) pour engrenages selon la revendication 1, **caractérisé en ce que** la pièce bride (11) est formée à partir d'une pièce en tôle sans enlèvement de copeaux.

6. Porte-satellites (2) pour engrenages selon la revendication 1, **caractérisé en ce que** des alésages (25) alignés sont agencés dans le premier disque annulaire (13) de la pièce bride (11) et dans le second disque annulaire (19) du pot (12) pour recevoir des axes (26) sur lesquels sont montés les pignons satellites (4).

7. Porte-satellites (2) pour engrenages selon la revendication 1, **caractérisé en ce que** le joint soudé (32) entre le prolongement annulaire (21) du pot (12) étagé et la réception annulaire de la pièce bride est réalisé par un procédé de soudage par résistance.

8. Porte-satellites (2) pour engrenages selon la revendication 1, **caractérisé en ce que** la surface intérieure du prolongement (14) en forme de pot est munie d'une denture intérieure (28) à cannelures.

9. Porte-satellites (2) pour engrenages selon la revendication 1, **caractérisé en ce que** sur le prolongement (14) en forme de pot de la pièce bride (11) est attaché un anneau intérieur (29, 31) d'une roue libre ou d'un roulement.

10. Porte-satellites (2) pour engrenages selon la revendication 9, **caractérisé en ce que** l'anneau intérieur (29, 31) est monté à force sur le prolongement (14) en forme de pot de la pièce bride (11).

11. Porte-satellites (2) pour engrenages selon la revendication 9, **caractérisé en ce que** l'anneau intérieur (29, 31) est monté par concordance de forme sur le prolongement (14) en forme de pot de la pièce bride (11).

12. Porte-satellites (2) pour engrenages selon la revendication 10, **caractérisé en ce que** le prolongement (14) en forme de pot de la pièce bride (11) est muni denture extérieure (30) à cannelures sur laquelle est monté l'anneau intériur (29, 31).

13. Porte-satellites (2) pour engrenages selon la revendication 9, **caractérisé en ce que** l'anneau intérieur (29) du roulement a une configuration massive.

14. Porte-satellites (2) pour engrenages selon la revendication 9, **caractérisé en ce que** l'anneau intérieur (31) du roulement est constitué d'un pot à deux brides fabriqué sans enlèvement de copeaux.
